# NEUE EUROPÄISCHE PATENTSCHRIFT

(11) **EP 3 536 172 B2**
(45) Veröffentlichungstag und Bekanntmachung des Hinweises auf die Entscheidung über den Einspruch: **02.09.2026**
(45) Hinweis auf die Patenterteilung: 19.08.2020
(21) Anmeldenummer: 19160191.3
(22) Anmeldetag: 01.03.2019
(51) Int. Cl.: A24C 5/32

(54) **SCHIEBETROMMEL DER TABAK VERARBEITENDEN INDUSTRIE**
TRANSFER DRUM FOR THE TOBACCO PROCESSING INDUSTRY
TAMBOUR COULISSANT DE L'INDUSTRIE DE TRANSFORMATION DU TABAC

(30) Priorität: 05.03.2018 DE 102018104957
(43) Veröffentlichungstag der Anmeldung: 11.09.2019
(73) Patentinhaber: Körber Technologies GmbH, 21033 Hamburg (DE)
(72) Erfinder: HOFMANN, Nils, 21029 Hamburg (DE); DIEDRICH, Daniel, 20253 Hamburg (DE); REMPEL, Konstantin, 49610 Quakenbrück (DE); LUKANIN, Maxim, 23617 Stockelsdorf (DE)
(74) Vertreter: Seemann & Partner Patentanwälte mbB

(56) Entgegenhaltungen:
- EP-A1- 2 198 725
- EP-A2- 3 141 134
- WO-A1-2017/203258
- WO-A1-2018/096518
- DE-A1- 102013 210 634
- DE-T2- 69 528 549

## Beschreibung

Die Erfindung betrifft eine Schiebetrommel der Tabak verarbeitenden Industrie mit in Umfangsrichtung der Schiebetrommel hintereinander in einer Reihe angeordneten Aufnahmemulden für stabförmige Artikel der Tabak verarbeitenden Industrie, insbesondere Filterstäbe und/oder Filterstücke und/oder segmentierte Produkte, wobei die Schiebetrommel um eine Rotationsachse rotierbar ist, wobei die Aufnahmemulden jeweils einen, vorzugsweise unterbrechungsfreien, Muldengrund aufweisen, wobei der Muldengrund der Aufnahmemulden jeweils von einem in Förderrichtung der Schiebetrommel vorauseilenden Muldensteg und von einem in Förderrichtung der Schiebetrommel nacheilenden Muldensteg begrenzt ist, wobei sich die Muldenstege parallel zur Rotationsachse der Schiebetrommel erstrecken und wobei entlang der Muldenstege die stabförmigen Artikel in längsaxialer Richtung während der Rotation der Schiebetrommel in den Aufnahmemulden verschiebbar sind oder verschoben werden, wobei die Muldenstege in Längsrichtung wenigstens einen in der Höhe abgestuften Muldenstegbereich aufweisen.

Ferner betrifft die Erfindung eine Verwendung einer Schiebetrommel der Tabak verarbeitenden Industrie sowie eine Maschine der Tabak verarbeitenden Industrie, insbesondere Filteransetzmaschine oder Filterherstellungsmaschine oder Segmentzusammenstellmaschine. Außerdem betrifft die Erfindung ein Verfahren zum queraxialen Fördern von stabförmigen Artikeln der Tabak verarbeitenden Industrie, insbesondere Filterstäbe und/oder aus Filterstäben geschnittene Filterstücke und/oder segmentierte Produkte.

In Maschinen der Tabak verarbeitenden Industrie, insbesondere Filteransetzmaschinen oder Maschinen zur Herstellung von alternativen Rauchprodukten wie z.B. Heat-Not-Burn-Produkten oder E-Zigaretten, werden Fördertrommeln eingesetzt, um Zigaretten, Filterstücke oder deren Komponenten zu transportieren.

Das Fördern der vorgenannten stabförmigen Gegenstände während der Herstellung von Zigaretten, Filtern sowie Filterzigaretten oder sogenannten Heat-Not-Burn-Produkten oder E-Zigaretten wird bei modernen Produktionsmaschinen der Tabak verarbeitenden Industrie im Allgemeinen mittels Fördertrommeln durchgeführt, deren Mantelfläche bzw. deren Trommelkörper zum queraxialen Fördern von stabförmigen Gegenständen (Zigaretten, Filterstäben oder Filterstopfen, Filterzigaretten) mit Nuten oder Aufnahmemulden zum Aufnehmen der stabförmigen Gegenstände versehen ist. Die Aufnahmemulden weisen hierbei einen Muldengrund auf.

Während der Förderung sind diese stabförmigen Artikel der Tabak verarbeitenden Industrie in Aufnahmemulden im Allgemeinen in Reihen queraxial hintereinander angeordnet.

Darüber hinaus sind als Fördertrommeln auch Schiebetrommeln z.B. in Filterzuführeinrichtungen an Filteransetzmaschinen bekannt, auf denen Filterstopfen als stabförmige Artikel längsaxial verschoben werden. Hierbei werden an einer mehrere Transporttrommeln aufweisenden Filterzuführeinrichtung mehrfachlange Filterstäbe aus einem Filterstabmagazin entnommen und in doppeltlange Filterstopfen auf einer Schneidtrommel geschnitten. Nach dem Schneiden werden die Filterstopfen auf einer Staffeltrommel gestaffelt, d.h. jeder geschnittene Filterstopfen wird separat in einer Mulde der Staffeltrommel versetzt zum nächsten Filterstopfen angeordnet. Im Anschluss daran werden die gestaffelten Filterstopfen in einem Verfahrensschritt auf einer Schiebetrommel in den Aufnahmemulden längsaxial verschoben, so dass die Filterstopfen danach in einer Reihe in queraxialer Richtung hintereinander ausgerichtet werden bzw. sind, wodurch die in der Reihe hintereinander angeordneten und ausgerichteten Filterstopfen von der Schiebetrommel an eine nachfolgende Fördertrommel übergeben werden.

Diese Trommeln werden üblicherweise im Zuge der Konfektionierung von Filterstäben und von Filterzigaretten eingesetzt, wobei Filterstabkomponenten mehrfacher Gebrauchslänge in einem so genannten Querverfahren, d.h. quer zu ihren Längsachsen, durch einmalige oder mehrmalige Unterteilung, Staffelung und Hintereinanderreihung für ihre nachfolgende Verbindung mit weiteren Filterkomponenten oder Rauchartikelkomponenten vorbereitet werden.

In EP 1 013 181 A1 ist eine Schiebe-/Schneidtrommel offenbart, wobei die Rauchartikelkomponenten bzw. Filterstücke in den Aufnahmemulden durch Anlegen von Saugluft an Saugbohrungen der Aufnahmen gegen längsverschiebbare Anschläge auf pneumatische Weise verschoben werden.

Im Dokument GB 2 267 021 A ist eine Filteransetzmaschine beschrieben, bei der aus zwei Magazinen jeweils Filterstäbe entnommen werden. Nach der Entnahme eines ersten Filterstabs wird dieser Filterstab mittig geschnitten und queraxial auseinandergeschoben. Anschließend wird ein zweiter Filterstab aus dem anderen Magazin mittig zwischen die Abschnitte des ersten Filterstabs eingesetzt. Diese Filterstabanordnung wird nachfolgend auf Trommeln jeweils geschnitten, gestaffelt und geschoben. Dieser Vorgang "Schneiden, Staffeln und Verschieben der Filterstücke" wird wiederholt und somit insgesamt zweimal ausgeführt. Der resultierende Kombinationsfilter aus den zwei verschiedenen Filterstäben wird nachfolgend einer Zusammenstelltrommel mit Zigarettenstäben übergeben.

Außerdem ist in DE 10 2013 210 634 A1 eine Schiebetrommel für eine Maschine der Tabak verarbeitenden Industrie offenbart.

Ferner offenbart DE 695 28 549 T2 eine Trennwalze bzw. Schiebe-trommel, auf der Kohlefilterstangenhälften als stabförmige Artikel in den Aufnahmemulden längsaxial verschoben werden.

Darüber hinaus ist in WO 2017/203258 A1 eine Rolltrommel offenbart.

Die Aufgabe der Erfindung besteht darin, beispielsweise für eine Filterzuführeinrichtung eine Schiebetrommel bereitzustellen, bei der unter anderem die Übergabe von stabförmigen Produkten aus den Aufnahmemulden verbessert werden soll, wobei der konstruktive Aufwand möglichst gering gehalten werden soll.

Gelöst wird diese Aufgabe durch eine Schiebetrommel der Tabak verarbeitenden Industrie mit in Umfangsrichtung der Schiebetrommel hintereinander in einer Reihe angeordneten Aufnahmemulden in denen stabförmige Artikel der Tabak verarbeitenden Industrie, insbesondere Filterstäbe und/oder Filterstücke und/oder segmentierte Produkte, angeordnet sind, wobei die Schiebetrommel um eine Rotationsachse rotierbar ist, wobei die Aufnahmemulden jeweils einen, vorzugsweise unterbrechungsfreien, Muldengrund aufweisen, wobei der Muldengrund der Aufnahmemulden jeweils von einem in Förderrichtung der Schiebetrommel vorauseilenden Muldensteg und von einem in Förderrichtung der Schiebetrommel nacheilenden Muldensteg begrenzt ist, wobei sich die Muldenstege parallel zur Rotationsachse der Schiebetrommel erstrecken und wobei entlang der Muldenstege die stabförmigen Artikel in längsaxialer Richtung während der Rotation der Schiebetrommel in den Aufnahmemulden verschiebbar sind oder verschoben werden, wobei die Muldenstege in Längsrichtung wenigstens einen in der Höhe abgestuften Muldenstegbereich aufweisen, die dadurch weitergebildet wird, dass die Muldenstege der Aufnahmemulden außerhalb des abgestuften Muldenstegbereichs eine maximale Höhe zwischen dem Muldengrund und einer Oberseite der Muldenstege aufweisen, wobei der oder die abgestuften Muldenstegbereiche eine Höhe zwischen 15% und 85% der maximalen Höhe, insbesondere zwischen 20% und 60% der maximalen Höhe, aufweisen, wobei die Muldenstege außerhalb des abgestuften Muldenstegbereichs die in den Aufnahmemulden aufgenommenen stabförmigen Artikel in der Höhe überragen, während im Bereich der in der Höhe abgestuften Muldenstegbereiche die verschobenen stabförmigen Artikel die Muldenstegbereiche überragen.

Die Erfindung beruht auf dem Gedanken, dass stabförmige Artikel in den Aufnahmemulden der Schiebetrommel längsaxial verschoben werden und dabei für die Übergabe an eine nachfolgende Trommel im Bereich der zurückversetzten Muldenstegbereiche angeordnet werden, wodurch die Übergabe der stabförmigen Artikel von der Schiebetrommel an eine nachfolgende Fördertrommel erleichtert wird, da es möglich ist, dass aufgrund der in radialer Richtung zurückversetzten, abgestuften Muldenstegbereiche die die stabförmigen Artikel aufnehmenden Elemente der nachfolgenden Fördertrommel in die zurückversetzten Muldenstegbereiche der Schiebetrommel eingreifen und dadurch die stabförmigen Artikel, wie zum Beispiel Filtersegmente, aus den Aufnahmemulden der Schiebetrommel zuverlässig übernehmen. Dadurch wird eine sichere Übergabe der verschobenen stabförmigen Artikel von der Schiebetrommel an die nachfolgende Fördertrommel erreicht. Im Rahmen der Erfindung kann vorgesehen sein, dass in den Aufnahmemulden ein oder auch mehrere stabförmige Artikel oder Segmente, wie z.B. Filtersegmente, gleichzeitig in längsaxialer Richtung verschoben werden oder verschiebbar sind.

Dadurch, dass die Muldenstege wenigstens einen in der Höhe abgestuften Muldenstegbereich aufweisen, wodurch die Übergabe von stabförmigen Artikeln aus den Aufnahmemulden der Schiebetrommel an eine nachfolgende Fördertrommel erleichtert wird, ist es für eine sichere Übergabe der stabförmigen Artikel nicht mehr notwendig, dass beispielsweise eine Auskämmeinrichtung oder dergleichen im Übergabebereich von der Schiebetrommel an die nachfolgende Fördertrommel angeordnet ist.

Vorzugsweise weist die Schiebetrommel durchgehende, und vorzugsweise unterbrechungsfreie, Muldenstege auf, wobei im Bereich der abgestuften Muldenstegbereiche die Oberseite oder Oberkante der Muldenstegbereiche gegenüber der Oberseite bzw. der Oberkante der Muldenstege in radialer Richtung nach innen zurückversetzt ist. Wird die Höhe der Muldenstege in Bezug auf den Muldengrund der Aufnahmemulden gemessen, so ist es im Rahmen der Erfindung vorgesehen, dass die Muldenstege (außerhalb des zurückversetzten Muldenstegbereichs) die in den Aufnahmemulden aufgenommenen stabförmigen Artikel in der Höhe überragen, während im Bereich der in der Höhe zurückversetzten bzw. abgestuften Muldenstegbereiche die verschobenen stabförmigen Artikel die Muldenstegbereiche überragen. Insbesondere sind die Muldenstege mit jeweils einem unterbrechungsfreien Muldengrund ausgebildet.

Gemäß der Erfindung ist vorgesehen, dass die Muldenstege der Aufnahmemulden außerhalb des abgestuften Muldenstegbereichs eine maximale Höhe zwischen dem Muldengrund und einer Oberseite der Muldenstege aufweisen, wobei der oder die abgestuften Muldenstegbereiche eine Höhe zwischen 15% und 85% der maximalen Höhe, insbesondere zwischen 20% und 60% der maximalen Höhe, aufweisen.

Im Rahmen der Erfindung kann hierbei vorgesehen sein, dass innerhalb der Muldenstegbereiche der Aufnahmemulden die Höhe nicht konstant ist, d.h. dass die Muldenstegbereiche Abschnitte aufweisen, wobei die Höhen der Muldenstegbereiche in den Abschnitten unterschiedlich sind und variieren.

In einer bevorzugten Ausführungsform der Schiebetrommel ist weiterhin vorgesehen, dass der oder die abgestuften Muldenstegbereiche U-förmig oder L-förmig oder zackenförmig oder zinnenförmig, insbesondere in Form von Rechteckzinnen, ausgebildet sind.

Um eine sichere und positionsgenaue Übergabe von verschobenen stabförmigen Artikeln von der Schiebetrommel an eine nachfolgende Fördertrommel zu ermöglichen, ist in einer Ausgestaltung der Schiebetrommel vorgesehen, dass an einer Seite der abgestuften Muldenstegbereiche ein Anschlag oder mehrere Anschläge für die stabförmigen Artikel in oder an den Aufnahmemulden vorgesehen sind. Dadurch werden die Artikel positionsgenau ausgerichtet. Die Anschläge können dabei als mitrotierende Anschläge oder ortsfeste bzw. feststehende Anschläge ausgebildet sein.

Hierzu ist in einer Weiterbildung der Schiebetrommel vorgesehen, dass in Umfangsrichtung der Schiebetrommel Anschläge mit unterschiedlichen Längen, vorzugsweise alternierend, vorgesehen sind. Hierdurch ist es möglich, in versetzter Weise die verschobenen stabförmigen Artikel an eine nachfolgende Fördertrommel im Bereich der Muldenstege anzuordnen.

Außerdem zeichnet sich die Schiebetrommel dadurch aus, dass die Aufnahmemulden im Bereich der abgestuften Muldenstegbereiche wenigstens eine mit Unterdruck beaufschlagbare Saugbohrung aufweisen, wodurch nach dem Verschiebevorgang der stabförmigen Artikel in den Aufnahmemulden die verschobenen stabförmigen Artikel in einem Transferbereich der Schiebetrommel sicher gehalten werden.

Außerdem ist es bei der Ausgestaltung der Schiebetrommel zweckmäßig, dass der oder die abgestuften Muldenstegbereiche der Muldenstege jeweils einen dem Muldengrund zugewandten und mit wenigstens einer Abschrägung versehenen Kantenbereich aufweisen. Hierdurch wird erreicht, dass beim Verschieben der stabförmigen Artikel in den Aufnahmemulden die stabförmigen Artikel an den Kanten der zurückversetzten Muldenstegbereiche nicht gegen Stoßkanten der Muldenstegbereiche stoßen. Durch die wenigstens eine Abschrägung oder mehrere Abschrägungen an den Kanten der Muldenstegbereiche wird eine sichere Führung der stabförmigen Artikel beim Verschieben der Artikel in den Aufnahmemulden erreicht.

Beispielsweise sind hierbei die Kantenbereiche der Muldenstegbereiche mit einer Fase ausgebildet.

Ferner wird die Erfindung gelöst durch eine Verwendung einer voranstehend beschriebenen Schiebetrommel der Tabak verarbeitenden Industrie in einer Trommelanordnung zum queraxialen Fördern von stabförmigen Artikeln der Tabak verarbeitenden Industrie, insbesondere Filterstäbe und/oder Filterstücke und/oder segmentierte Produkte. Die Trommelanordnung weist hierbei wenigstens eine der Schiebetrommel in Förderrichtung der stabförmigen Artikel stromaufwärts angeordnete Fördertrommel und eine in Förderrichtung der stabförmigen Artikel nachgeordnete Fördertrommel auf. Insbesondere ist die der Schiebetrommel stromaufwärts angeordnete Fördertrommel als Staffeltrommel ausgebildet, so dass von der Staffeltrommel in gestaffelter Weise stabförmige Artikel an die Schiebetrommel bzw. in die Aufnahmemulden der Schiebetrommel abgegeben werden und anschließend auf der Schiebetrommel die übernommenen stabförmigen Produkte entlang der Aufnahmemulden längsaxial verschoben werden.

Des Weiteren wird die Aufgabe gelöst durch eine Verwendung einer voranstehend beschriebenen Schiebetrommel der Tabak verarbeitenden Industrie in einer Einrichtung zum Überführen von längsaxial geförderten, stabförmigen Artikeln der Tabak verarbeitenden Industrie, insbesondere Filterstäbe und/oder Filterstücke und/oder segmentierte Produkte, von einem die Artikel längsaxial fördernden Längsförderer auf einen die Artikel queraxial abfördernden Querförderer, wobei die Schiebetrommel als Querförderer ausgebildet ist. Hierbei ist die Schiebetrommel als Einstoßtrommel der Einrichtung ausgebildet.

Außerdem wird die Erfindung gelöst durch eine Maschine der Tabak verarbeitenden Industrie, insbesondere Filteransetzmaschine oder Filterherstellungsmaschine oder Segmentzusammenstellmaschine, die mit einer voranstehend beschriebenen Schiebetrommel ausgebildet ist. Zur Vermeidung von Wiederholungen wird auf die obigen Ausführungen ausdrücklich verwiesen.

Des Weiteren wird die Aufgabe gelöst durch ein Verfahren zum queraxialen Fördern von stabförmigen Artikeln der Tabak verarbeitenden Industrie, insbesondere Filterstäbe und/oder aus Filterstäben geschnittene Filterstücke und/oder segmentierte Produkte, unter Verwendung einer voranstehend beschriebenen Schiebetrommel.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch im Ausschnitt eine Ansicht einer Trommelanordnung einer Filterzuführeinrichtung einer Filteransetzmaschine;
- Fig. 2a: schematisch eine perspektivische Ansicht einer erfindungsgemäßen Schiebetrommel;
- Fig. 2b: schematisch eine Querschnittsansicht der Schiebetrommel von Fig. 2a im Ausschnitt;
- Fig. 3a: schematisch eine perspektivische Ansicht einer Schiebetrommel gemäß einer weiteren Ausführungsform im Ausschnitt;
- Fig. 3b: schematisch im Ausschnitt eine perspektivische Ansicht einer Schiebetrommel mit einem modifizierten Anschlagbereich;
- Fig. 4a: schematisch eine perspektivische Ansicht einer Schiebetrommel gemäß einer weiteren Ausführungsform im Ausschnitt und
- Fig. 4b: schematisch eine Querschnittsansicht der Schiebetrommel von Fig. 4a im Ausschnitt.

In den Zeichnungen sind jeweils gleiche oder gleichartige Elemente und/oder Teile mit denselben Bezugsziffern versehen, so dass von einer erneuten Vorstellung jeweils abgesehen wird.

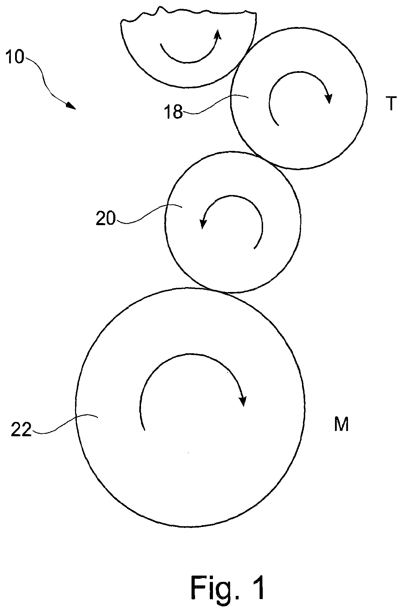

Fig. 1 zeigt schematisch eine Ansicht einer Filterzuführeinrichtung 10 im Ausschnitt, wobei die Filterzuführeinrichtung 10 eine Trommelanordnung T aufweist, die Bestandteil einer schematisch bezeichneten Filteransetzmaschine M ist. Hierbei ist die Trommelanordnung T in die Filteransetzmaschine M integriert.

Aus einem (hier nicht dargestellten) Magazin mit Filterstäben werden Filterstäbe mittels einer Entnahmetrommel entnommen und unter Verwendung von Schneidmessern in mehrere Filterstopfen geschnitten. Anschließend werden die Filterstopfen auf einer Staffeltrommel 18 angeordnet, wobei die Filterstopfen hierbei auf der Staffeltrommel 18 längsaxial und queraxial zueinander versetzt in den Aufnahmemulden angeordnet sind. Von der Staffeltrommel 18 werden die gestaffelt angeordneten Filterstopfen anschließend an eine Schiebetrommel 20 übergeben, so dass die Filterstopfen längsaxial in den Aufnahmemulden der Schiebetrommel 20 gegen einen seitlichen Anschlag verschoben werden. Anschließend werden die in einer Reihe queraxial hintereinander angeordneten Filterstäbe von der Schiebetrommel 20 an eine nachfolgende Transporttrommel 22 übergeben.

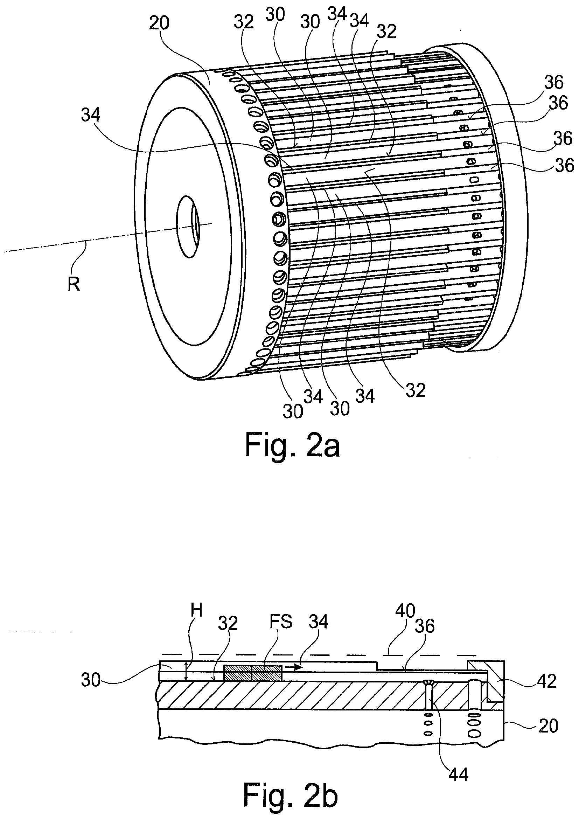

In Fig. 2a ist schematisch eine perspektivische Ansicht einer erfindungsgemäßen Schiebetrommel 20 gemäß einer ersten Ausführungsform gezeigt. Hierbei weist die Schiebetrommel 20 in Umfangsrichtung hintereinander angeordnete Aufnahmemulden 30 auf, in denen die Filterstopfen in gestaffelter Weise und versetzt zueinander bei der Übergabe von der Staffeltrommel angeordnet werden.

Jede Aufnahmemulde 30 weist einen Muldengrund 32 auf, auf dem die stabförmigen Artikel bzw. Filterstopfen angeordnet sind. Darüber hinaus ist der Muldengrund 32 jeder Aufnahmemulde 30 von einem in Förderrichtung der Schiebetrommel 20 vorauseilenden Muldensteg 34 und von einem in Förderrichtung dem Muldengrund 32 nacheilenden Muldensteg 34 begrenzt. Der Muldengrund 32 ist vorzugweise unterbrechungsfrei ausgebildet.

In Fig. 2b ist schematisch ein Querschnitt durch die in Fig. 2a gezeigten Schiebetrommel 20 im Ausschnitt gezeigt.

Bei Aufnahme von stabförmigen Artikeln bzw. Filterstäben in den Aufnahmemulden 30 werden diese während der queraxialen Förderung auf der Fördertrommel bei Rotation der Schiebetrommel 20 um ihre Rotationsachse R in längsaxialer Richtung entlang der Aufnahmemulden 30 verschoben. Für die Verschiebebewegung der stabförmigen Artikel bzw. der Filterstäbe in den Aufnahmemulden 30 ist hierbei zwischen dem Übergabepunkt von der in Förderrichtung stromaufwärts angeordneten Fördertrommel und der nachfolgenden Fördertrommel eine Abdeckung 40 an der Schiebetrommel 20 angeordnet. In Fig. 2b ist schematisch die Abdeckung 40 aus Gründen der Übersichtlichkeit gestrichelt eingezeichnet.

In Fig. 2b ist schematisch ein Filterstopfen FS exemplarisch gezeigt. Es kann in einer weiteren Ausgestaltung vorgesehen sein, dass zwei oder mehr Filterstopfen oder Filtersegmente in der Aufnahmemulde 30 oder den Aufnahmemulden 30 nebeneinander angeordnet sind und, vorzugsweise gleichzeitig, in längsaxialer Richtung verschoben werden.

Bei Anordnung der Filterstopfen FS nach der Übergabe von der Staffeltrommel 18 werden die Filterstopfen FS in den Aufnahmemulden 30 angeordnet, wobei die Muldenstege 34 eine Muldenhöhe H aufweisen, die größer ist als der Durchmesser der in den Aufnahmemulden 30 angeordneten Filterstopfen FS bzw. stabförmigen Artikeln. Die (maximale) Muldenhöhe H der Aufnahmemulden 30 ist hierbei gemessen zwischen dem Muldengrund 32 und der Oberkante der Muldenstege 34.

Die Muldenstege 34 erstrecken sich in Längsrichtung und weisen seitlich einen abgestuften Muldenstegbereich 36 auf, der eine geringere Höhe zum Muldengrund 32 besitzt. Die zurückversetzten Muldenstegbereiche 36 weisen hierbei eine Höhe auf, die kleiner ist als der Durchmesser der Filterstopfen FS, so dass die Filterstopfen FS oder stabförmigen Artikel zwischen den Muldenstegbereichen 36 hervorragen.

Der radial nach innen versetzte Muldenstegbereich 36 bei der in Fig. 2a und 2b dargestellten Schiebetrommel 20 ist hierbei nach Art einer Stufe ausgebildet. Seitlich werden die Muldenstegbereiche 36 am Rand von einem Anschlag 42 begrenzt, so dass während der queraxialen Förderung der Filterstopfen FS auf der Schiebetrommel 20 und nach ihrer längsaxialen Verschiebung in den Aufnahmemulden 30 gegen den Anschlag 42 verschoben werden.

Der Anschlag 42 kann feststehend an der Schiebetrommel 20 angeordnet sein, da er in radialer Richtung höher als der Muldenstegbereich 36 positioniert ist.

Im Bereich des Muldenstegbereichs 36 weist die Schiebetrommel 20 eine Saugbohrung 44 auf, so dass nach Anordnung der Filterstopfen FS am Anschlag 42 die Filterstopfen FS mit Unterdruck beaufschlagt werden und in den Aufnahmemulden 30 bis zu ihrer Abgabe an die nachfolgende Fördertrommel gehalten werden.

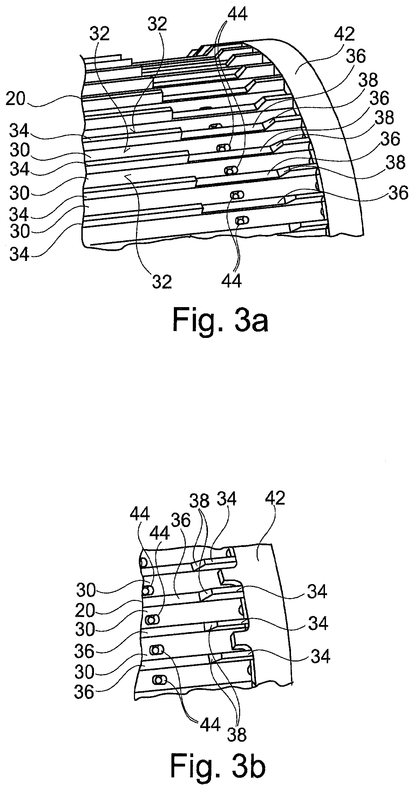

In Fig. 3a ist in einer perspektivischen Ansicht ein Ausschnitt einer Schiebetrommel 20 gemäß einer weiteren Ausführungsform dargestellt. Hierbei weist die Schiebetrommel 20 Muldenstege 34 auf, die einen wannenartigen oder U-förmigen zurückversetzten, d.h. in der Höhe abgestuften Muldenstegbereich 36 aufweisen. Um das längsaxiale Verschieben der stabförmigen Artikel in den Aufnahmemulden zu verbessern, ist am dem dem Anschlag 42 zugewandten Bereich der Muldenstegbereiche 36 eine Fase 38 vorgesehen.

In Fig. 3b ist ein weiteres Ausführungsbeispiel für eine erfindungsgemäße Schiebetrommel 20 im Ausschnitt dargestellt, wobei seitlich an den Muldenstegbereichen 36 verschieden lange Anschläge an den Aufnahmemulden 30 seitlich angeordnet sind.

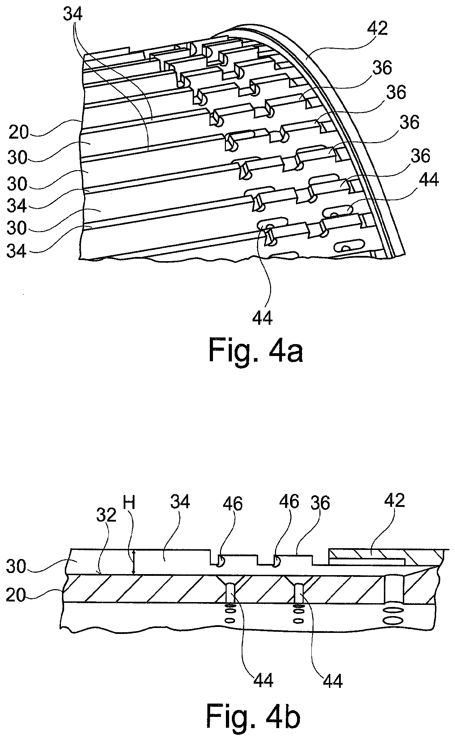

In Fig. 4a und Fig. 4b sind jeweils verschiedene Ansichten einer Schiebetrommel 20 gemäß einer weiteren Ausführungsform dargestellt. Hierbei sind die Muldenstegbereiche 36 der Muldenstege 34 zinnenartig, vorzugsweise in Form von Rechteckzinnen, ausgebildet. Insbesondere weisen die höheren Absätze der zinnenförmigen Muldenstegbereiche 36 eine Höhe zwischen 50% bis 80% der Muldenhöhe H, insbesondere 65% bis 75% der Muldengröße H, auf. Die radial weiter nach innen zurückversetzten rechteckförmigen Vertiefungen der zinnenförmigen Muldenstegbereiche 36 weisen vorzugsweise eine Höhe zwischen 20% bis 45% der Muldenhöhe H, insbesondere zwischen 35% bis 45% der Muldenhöhe H, auf. Um Stoßkanten der Muldenstegbereiche 36 für die stabförmigen Artikel in den Aufnahmemulden 30 beim Verschiebevorgang zu vermeiden, sind die Kantenbereiche der Muldenstegbereiche 36 mit Abschrägungen 46 ausgebildet.

### Bezugszeichenliste

- 10: Filterzuführeinrichtung
- 18: Staffeltrommel
- 20: Schiebetrommel
- 22: Transporttrommel
- 30: Aufnahmemulde
- 32: Muldengrund
- 34: Muldensteg
- 36: Muldenstegbereich
- 38: Fase
- 40: Abdeckung
- 42: Anschlag
- 44: Saugbohrung
- 46: Abschrägung
- FS: Filterstopfen
- H: Muldenhöhe
- M: Filteransetzmaschine
- R: Rotationsachse
- T: Trommelanordnung

## Patentansprüche

1. Schiebetrommel (20) der Tabak verarbeitenden Industrie mit in Umfangsrichtung der Schiebetrommel (20) hintereinander in einer Reihe angeordneten Aufnahmemulden (30) in denen stabförmige Artikel (FS) der Tabak verarbeitenden Industrie, insbesondere Filterstäbe und/oder Filterstücke und/oder segmentierte Produkte, angeordnet sind, wobei die Schiebetrommel (20) um eine Rotationsachse (R) rotierbar ist, wobei die Aufnahmemulden (30) jeweils einen Muldengrund (32) aufweisen, wobei der Muldengrund (32) der Aufnahmemulden (30) jeweils von einem in Förderrichtung der Schiebetrommel (20) vorauseilenden Muldensteg (34) und von einem in Förderrichtung der Schiebetrommel (20) nacheilenden Muldensteg (34) begrenzt ist, wobei sich die Muldenstege (34) parallel zur Rotationsachse (R) der Schiebetrommel (20) erstrecken und wobei entlang der Muldenstege (34) die stabförmigen Artikel (FS) in längsaxialer Richtung während der Rotation der Schiebetrommel (20) in den Aufnahmemulden (30) verschiebbar sind oder verschoben werden, wobei die Muldenstege (34) in Längsrichtung wenigstens einen in der Höhe abgestuften Muldenstegbereich (36) aufweisen, **dadurch gekennzeichnet, dass** die Muldenstege (34) der Aufnahmemulden (30) außerhalb des abgestuften Muldenstegbereichs (36) eine maximale Höhe (H) zwischen dem Muldengrund (32) und einer Oberseite der Muldenstege (34) aufweisen, wobei der oder die abgestuften Muldenstegbereiche (36) eine Höhe zwischen 15% und 85% der maximalen Höhe, insbesondere zwischen 20% und 60% der maximalen Höhe (H), aufweisen, wobei die Muldenstege (34) außerhalb des abgestuften Muldensteqbereichs (36) die in den Aufnahmemulden (20) aufgenommenen stabförmigen Artikel (FS) in der Höhe überragen, während im Bereich der in der Höhe abgestuften Muldenstegbereiche (36) die verschobenen stabförmigen Artikel (FS) die Muldenstegbereiche (36) überragen.

2. Schiebetrommel (20) nach Anspruch 1, **dadurch gekennzeichnet, dass** der oder die abgestuften Muldenstegbereiche (36) U-förmig oder L-förmig oder zackenförmig oder zinnenförmig, insbesondere in Form von Rechteckzinnen, ausgebildet sind.

3. Schiebetrommel (20) nach Anspruch 1 oder 2, **dadurch gekennzeichnet, dass** an einer Seite der abgestuften Muldenstegbereiche (36) ein Anschlag (42) oder mehrere Anschläge für die stabförmigen Artikel (FS) in oder an den Aufnahmemulden (30) vorgesehen sind.

4. Schiebetrommel (20) nach Anspruch 3, **dadurch gekennzeichnet, dass** in Umfangsrichtung der Schiebetrommel (20) Anschläge mit unterschiedlichen Längen, vorzugsweise alternierend, vorgesehen sind.

5. Schiebetrommel (20) nach einem der Ansprüche 1 bis 4, **dadurch gekennzeichnet, dass** die Aufnahmemulden (30) im Bereich der abgestuften Muldenstegbereiche (36) wenigstens eine mit Unterdruck beaufschlagbare Saugbohrung (44) aufweisen.

6. Schiebetrommel (20) nach einem der Ansprüche 1 bis 5, **dadurch gekennzeichnet, dass** der oder die abgestuften Muldenstegbereiche (36) der Muldenstege (34) jeweils einen dem Muldengrund (32) zugewandten und mit wenigstens einer Abschrägung (38, 46) versehenen Kantenbereich aufweisen.

7. Verwendung einer Schiebetrommel (20) der Tabak verarbeitenden Industrie nach einem der Ansprüche 1 bis 6 in einer Trommelanordnung (T) zum queraxialen Fördern von stabförmigen Artikeln (FS) der Tabak verarbeitenden Industrie, insbesondere Filterstäbe und/oder Filterstücke und/oder segmentierte Produkte.

8. Verwendung einer Schiebetrommel (20) der Tabak verarbeitenden Industrie nach einem der Ansprüche 1 bis 6 in einer Einrichtung zum Überführen von längsaxial geförderten, stabförmigen Artikeln der Tabak verarbeitenden Industrie, insbesondere Filterstäbe und/oder Filterstücke und/oder segmentierte Produkte, von einem die Artikel längsaxial fördernden Längsförderer auf einen die Artikel queraxial abfördernden Querförderer, wobei die Schiebetrommel (20) als Querförderer ausgebildet ist.

9. Maschine (M) der Tabak verarbeitenden Industrie, insbesondere Filteransetzmaschine oder Filterherstellungsmaschine oder Segmentzusammenstellmaschine, mit einer Schiebetrommel (20) nach einem der Ansprüche 1 bis 6.

10. Verfahren zum queraxialen Fördern von stabförmigen Artikeln (FS) der Tabak verarbeitenden Industrie, insbesondere Filterstäbe und/oder aus Filterstäben geschnittene Filterstücke und/oder segmentierte Produkte, unter Verwendung einer Schiebetrommel (20) nach einem der Ansprüche 1 bis 6.

## Claims

1. A pusher drum (20) for the tobacco processing industry having receiving grooves (30) arranged sequentially in a row in the peripheral direction of the pusher drum (20) in which rod-shaped articles (FS) of the tobacco processing industry, in particular filter rods, and/or filter pieces, and/or segmented products, are arranged, wherein the pusher drum (20) can be rotated about an axis of rotation (R), wherein the receiving grooves (3) each have a groove bottom (32), wherein the groove bottom (32) of the receiving grooves (30) are each bordered by a groove bar (34) projecting in the delivery direction of the pusher drum (20), and by a groove bar (34) trailing in the delivery direction of the pusher drum (20), wherein the groove bars (34) extend parallel to the axis of rotation (R) of the pusher drum (20), wherein the rod-shaped articles (FS) can be pushed or are pushed in the receiving grooves (30) along the groove bars (34) in the longitudinally axial direction during the rotation of the pusher drum (20), wherein the groove bars (34) have at least one groove bar region (36) that is stepped in height, **characterized in that** the groove bars (34) of the receiving grooves (30) have a maximum height (H) between the groove bottom (32) and a top side of the groove bars (34) outside of the stepped groove bar region (36), wherein the stepped groove bar region or the stepped groove bar regions (36) have a height between 15% and 85% of the maximum height, in particular between 20% and 60% of the maximum height (H), wherein the groove bars (34) project the rod-shaped articles (FS) being arranged in the grooves (30) away from the stepped groove bar region (36), whereas in the region of the stepped groove bar regions (36) the pushed rod-shaped articles (FS) project the stepped groove bar regions (36).

2. The pusher drum (20) according to claim 1, **characterized in that** the stepped groove bar region or the stepped groove bar regions (36) are formed U-shaped, or L-shaped, or zigzagged or crenellated, in particular in the form of rectangular crenellations.

3. The pusher drum (20) according to claim 1 or 2, **characterized in that** a stop (42) or several stops for the rod-shaped articles (FS) are provided in or on the receiving grooves (30) on a side of the stepped groove bar regions (36).

4. The pusher drum (20) according to claim 3, **characterized in that** stops with different lengths, preferably alternating, are provided in the peripheral direction of the pusher drum (20).

5. The pusher drum (20) according to one of claims 1 to 4, **characterized in that** the receiving grooves (30) in the region of the stepped groove bar regions (36) have at least one suction hole (44) to which a vacuum can be applied.

6. The pusher drum (20) according to one of claims 1 to 5, **characterized in that** the stepped groove bar region or the stepped groove bar regions (36) of the groove bars (34) each have an edge region facing the groove bottom (32) and provided with at least one bevel (38, 46).

7. A use of a pusher drum (20) of the tobacco processing industry according to one of claims 1 to 6 in a drum arrangement (T) for the transaxial conveyance of rod-shaped articles (FS) of the tobacco processing industry, in particular filter rods, and/or filter pieces, and/or segmented products.

8. The use of a pusher drum (20) of the tobacco processing industry according to one of claims 1 to 6 in a device for transferring rod-shaped articles of the tobacco processing industry conveyed in a longitudinally axial direction, in particular filter rods, and/or filter pieces, and/or segmented products from a longitudinal conveyor conveying the articles in a longitudinally axial direction to a transverse conveyor conveying away the articles in a transverse axial direction, wherein the pusher drum (20) is designed as a transverse conveyor.

9. A machine (M) of the tobacco processing industry, in particular a filter assembler, or filter production machine, or segment assembling machine, with a pusher drum (20) according to one of claims 1 to 6.

10. A method for the transaxial conveyance of rod-shaped articles (FS) of the tobacco processing industry, in particular filter rods and/or filter pieces cut from filter rods, and/or segmented products, using a pusher drum (20) according to one of claims 1 to 6.

## Revendications

1. Tambour coulissant (20) de l'industrie de traitement du tabac, comprenant des creux de réception (30) disposés successivement en une rangée dans la direction circonférentielle du tambour coulissant (20) dans lesquels sont placés des articles en forme de tige (FS) de l'industrie de traitement du tabac, en particulier des tiges de filtre et/ou des bouts de filtre et/ou des produits segmentés, le tambour coulissant (20) peut tourner autour d'un axe de rotation (R), dans lequel les creux de réception (30) présentent chacun un fond de creux (32), dans lequel le fond de creux (32) des creux de réception (30) est délimité respectivement par une âme de creux (34) dirigée vers l'avant dans la direction de transport du tambour coulissant (20) et par une âme de creux (34) dirigée vers l'arrière dans la direction de transport du tambour coulissant (20), dans lequel les âmes de creux (34) s'étendent parallèlement à l'axe de rotation (R) du tambour coulissant (20) et dans lequel les articles en forme de tige (FS) peuvent être déplacés ou sont déplacés dans les creux de réception (30) le long des âmes de creux (34) dans la direction axiale longitudinale pendant la rotation du tambour coulissant (20), dans lequel les âmes de creux (34) présentent, dans la direction longitudinale, au moins une région d'âme de creux (36) étagée dans la hauteur, **caractérisé en ce que** les âmes (34) des creux de réception (30) extérieures à la région d'âme de creux (36) étagée dans la hauteur présentent une hauteur maximale (H) entre le fond de creux (32) et une face supérieure des âmes de creux (34), dans lequel la ou les région(s) d'âme de creux (36) étagée(s) dans la hauteur présente(nt) une hauteur comprise entre 15 % et 85 % de la hauteur maximale, en particulier entre 20 % et 60 % de la hauteur maximale (H), les âmes de creux (34) situées en dehors de la région d'âmes de creux (36) étagées dans la hauteur dépassant en hauteur les articles en forme de tige (FS) logés dans les creux de réception (20), tandis que dans la zone des régions d'âmes de creux (36) étagées dans la hauteur, les articles en forme de tige (FS) décalés dépassent en hauteur les parties d'âmes de creux(36).

2. Tambour coulissant (20) selon la revendication 1, **caractérisé en ce que** la ou les région(s) d'âme de creux étagée(s) dans la hauteur (36) est/sont conçue(s) en forme de U ou en forme de L ou dentelée(s) ou crénelée(s), en particulier en forme de créneaux rectangulaires.

3. Tambour coulissant (20) selon la revendication 1 ou 2, **caractérisé en ce que** sur un côté des régions d'âme de creux étagées dans la hauteur (36), il est prévu une butée (42) ou plusieurs butées pour les articles en forme de tige (FS) dans ou sur les creux de réception (30).

4. Tambour coulissant (20) selon la revendication 3, **caractérisé en ce que** dans la direction circonférentielle du tambour coulissant (20), il est prévu des butées de longueurs différentes, de préférence en alternance.

5. Tambour coulissant (20) selon l'une des revendications 1 à 4, **caractérisé en ce que** les creux de réception (30) dans la région des régions d'âme de creux étagées dans la hauteur (36) présentent au moins un alésage d'aspiration (44) susceptible d'être sollicité avec une pression négative.

6. Tambour coulissant (20) selon l'une des revendications 1 à 5, **caractérisé en ce que** la ou les région(s) d'âme de creux étagée(s) dans la hauteur (36) des âmes de creux (34) présente(nt) respectivement une région d'arête tournée vers le fond de creux (32) et pourvue d'au moins un chanfrein (38, 46).

7. Utilisation d'un tambour coulissant (20) de l'industrie de traitement du tabac selon l'une des revendications 1 à 6 dans un ensemble de tambour (T) pour le transport axialement transversal d'articles en forme de tige (FS) de l'industrie de traitement du tabac, en particulier de tiges de filtre et/ou de bouts de filtre et/ou de produits segmentés.

8. Utilisation d'un tambour coulissant (20) de l'industrie de traitement du tabac selon l'une des revendications 1 à 6 dans un système de transfert d'articles en forme de tige de l'industrie de traitement du tabac transportés dans le sens axialement longitudinal, en particulier de tige de filtre et/ou de bouts de filtre et/ou de produits segmentés, à partir d'un convoyeur longitudinal transportant les articles dans le sens axialement longitudinal vers un convoyeur transversal évacuant les articles dans le sens axialement transversal, le tambour coulissant (20) étant conçu comme un convoyeur transversal.

9. Machine (M) de l'industrie de traitement du tabac, en particulier une machine de fixation de filtres ou une machine de fabrication de filtres ou une machine d'assemblage de segments, comprenant un tambour coulissant (20) selon l'une des revendications 1 à 6.

10. Procédé pour le transport axialement transversal d'articles en forme de tige (FS) de l'industrie de traitement du tabac, en particulier de tiges de filtre et/ou de bouts de filtre découpés à partir de tiges de filtre et/ou de produits segmentés, utilisant un tambour coulissant (20) selon l'une des revendications 1 à 6.
